# EUROPEAN PATENT SPECIFICATION

(11) **EP 1 137 556 B1**
(45) Date of publication and mention of the grant of the patent: **23.06.2004**
(21) Application number: 99959545.7
(22) Date of filing: 09.12.1999
(51) Int. Cl.: B60R 25/04

(54) **VEHICLE IMMOBILISATION SYSTEM**
FAHRZEUGWEGFAHRSPERRE
SYSTEME D'IMMOBILISATION DE VEHICULE

(30) Priority: 12.12.1998 GB 9827362; 21.09.1999 GB 9922166
(43) Date of publication of application: 04.10.2001
(73) Proprietor: Howells, Donald Glanmor, Northamptonshire NN10 9EX (GB)
(72) Inventor: Howells, Donald Glanmor, Northamptonshire NN10 9EX (GB)
(74) Representative: Evans, Huw David Duncan
(86) International application number: PCT/GB1999/004132
(87) International publication number: WO 2000/035724

(56) References cited:
- WO-A-98/30421
- GB-A- 2 305 216
- US-A- 4 660 528
- US-A- 4 878 050
- US-A- 5 276 728
- US-A- 5 933 075

## Description

This invention relates to a vehicle immobilisation system of the type comprising a vehicle unit, a first remote control device and a second remote control device, the vehicle unit comprising a receiver for receiving wireless control signals directly from said remote control devices and means for immobilising said vehicle in response to predetermined control signals from either said first or said second remote control device, wherein said first remote control device is arranged to transmit a predetermined control signal which is substantially unique to said receiver and wherein said second remote control device comprises externally operable selection means for selecting the predetermined control signal to be transmitted.

GB 2,305,216 discloses a system of the above-mentioned type, which is arranged to combat the problem of car thefts and joy-ridings.

Typically, the most conventional way adopted by the police of stopping a stolen vehicles is either by pursuing it or by placing a device on the road, which punctures the vehicle's tyres. Both of these methods of stopping stolen vehicles are unsatisfactory, since they generally involve dangerous pursuits at high speeds.

In the system of GB 2,305,216, the first remote control device is kept by the vehicle's owner, so that the vehicle can be immobilised each time it is left unattended. The second remote control device is kept by the police and in the event of a car theft or joyriding, the police merely have to identify the vehicle, select an appropriate control signal and then transmit the control signal, either from a pursuit vehicle or from the roadside, to immobilise the vehicle.

It will be appreciated that the system is essentially a conventional vehicle immobilisation system with the added facility that it can be activated by the police. Thus, the cost of the system to a vehicle manufacturer or owners is no greater than the cost of a conventional vehicle immobilisation system, of the type commonly fitted to vehicles nowadays.

US 5,933,075 discloses a vehicle immobilisation system comprising a vehicle unit and a remote control device which can be kept by the police and in the event of a car theft or joyriding, the police merely have to identify the vehicle, select an appropriate control signal and then transmit the control signal, either from a pursuit vehicle or from the roadside, to immobilise the vehicle. The remote control device comprises means for determining the format of the predetermined control signal to be transmitted, from the vehicle's registration number, which is input using a keypad.

W098/304421 discloses a vehicle immobilisation system comprising a vehicle unit comprising a display which displays the details of vehicles in the proximate area carrying a responder. The unit can then selectively disable one of the vehicles.

US 5,276,728 discloses a vehicle immobilisation system comprising a vehicle unit which transmits a signal to a receiver in the event that the vehicle's alarm is activated. The vehicle's owner or the police can then disable the vehicle by transmitting a disabling signal over the conventional cellular telephone network to the vehicle unit. A disadvantage of this system is that it is complicated in construction, thereby making it expensive, particularly owing to the fact that the system incorporates a cellular telephone receiver. The added expense and limited use of this kind of system means that car manufacturers and owners will be deterred from installing such a system in their vehicles.

I have now devised a vehicle immobilisation system of the type disclosed in GB 2,305,216, which is characterised in that the format of the predetermined control signal to be transmitted is determined from the make and/or model of the vehicle, which is input using said externally operable selection means.

Most conventional vehicle immobilisation systems transmit a coded control signal, which changes each time the system is activated or deactivated, in order to prevent unauthorised persons from receiving the transmitted code and then using the transmitted signal to deactivate the vehicle's immobiliser.

In order to overcome this problem, the vehicle unit may be responsive to either a master control signal from the second remote control device or a control signal transmitted by the first remote control device.

Preferably, the vehicle unit will not respond to control signals from the second control unit, once the vehicle is immobilised using said first remote control device. Thus, in the event that anyone manages to fraudulently obtain the master control signal, they will not be able to de-activate the immobiliser and steal the vehicle.

Preferably, the second remote control device comprises a directional aerial, so that the control signal can be directed at the vehicle to be immobilised, thereby avoiding any risk of immobilising other vehicles in the vicinity.

Preferably, the power of the signal transmitted by the second remote control device is substantially greater than the power transmitted by the first remote control device. Thus, the vehicle can be immobilised by the police from a distance, which is much greater than those in which conventional remote devices normally operate. The high power of the control signal also means that the vehicle unit will receive a strong signal, even if the vehicle's bodywork has significantly attenuated the signal.

Preferably the vehicle unit is arranged not to respond to control signals received from the first remote control device, once a control signal has been received from the second remote control device. Thus, joyriders and car thieves cannot override any signals which have been transmitter by the police to stop their vehicle.

Preferably the vehicle unit can be arranged to only partially immobilise the vehicle, so that the vehicle slows rather than stops, thereby avoiding any risk of an accident being caused by the vehicle stopping suddenly.

Preferably the vehicle unit comprises means for selecting and/or varying the degree of immobilisation, for example so that the vehicle can be brought to a stop in a controlled manner.

Preferably the vehicle unit comprises means for de-activating the immobiliser.

An embodiment of this invention will not be described by way of example only and with reference to the accompanying drawing, in which:
FIGURE 1 is a block diagram of a vehicle immobilisation system in accordance with this invention;
FIGURE 2 is a perspective view of a remote device of the system of Figure 1, for installing in a police vehicle; and
FIGURE 3 is a perspective view of the system of Figure 1 being used to stop a vehicle.

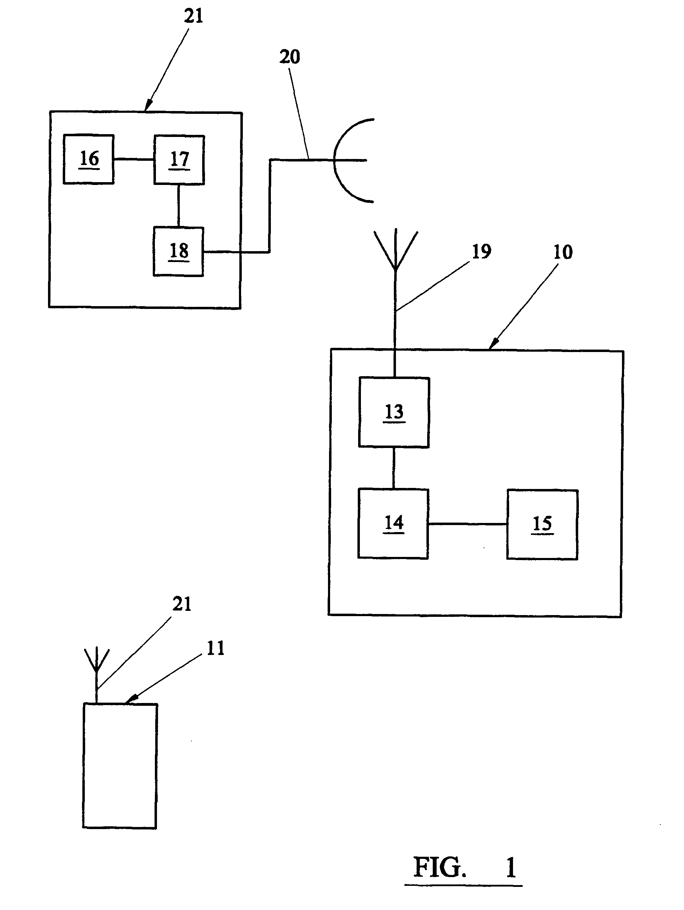

Referring to Figure 1 of the drawings, there is shown a vehicle immobilisation system comprising a unit 10 for mounting in a vehicle, and one or more remote devices e.g. 11 for normally operating the vehicle unit 10. The system may be fitted in a vehicle from new, alternatively it may be fitted to an existing vehicle as an accessory. The remote control device 11 comprises a transmitter which is connected to an aerial 21. The remote control device 11 transmits a coded control signal when an actuator thereon is actuated.

The vehicle unit 10 is normally mounted under the bonnet of the vehicle and a small aerial 19 is provided for receiving wireless control signals from the remote control device 11. The aerial 19 is connected to a receiver 13, which receives and decodes any signals that are received. The decoded signal is then passed to a control circuit 14, which verifies that the received code corresponds with a predetermined code, which is substantially unique to the vehicle.

If a valid code is received, the control circuit 14 changes that state of a device 15 which immobilises the vehicle, say by inhibiting the vehicle's ignition or engine management system.

It will be appreciated that the system as hereinbefore described is the same as a conventional vehicle immobilisation system. However, in accordance with this invention, the vehicle unit 10 is also arranged to respond to control signals transmitted from a further remote control device 12 kept and operated by the police.

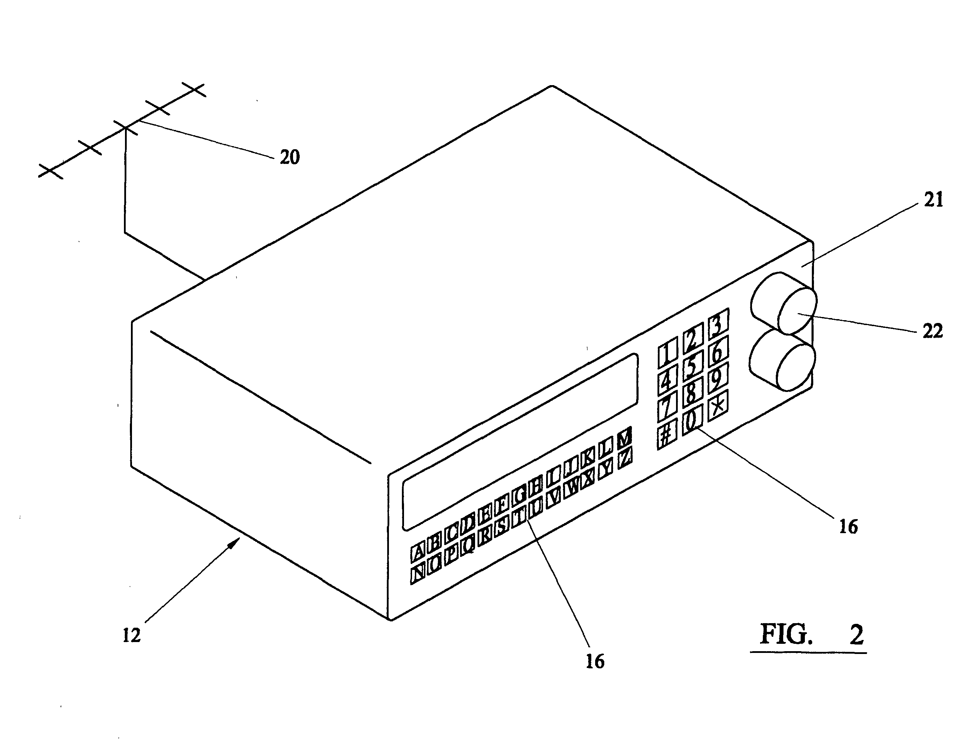

Referring to Figure 2 of the drawings, the remote control 12 comprises a self-contained unit 21 for mounting in a police car. Alternatively, it may comprise a portable unit for use on the roadside. The unit 21 comprises a front panel having a plurality of alpha-numeric keys 16, which can be used to enter the identity of the vehicle to be stopped. The unit 20 is connected to a directional aerial, which can either be fixed to transmit signals in one direction or movable, so that signals can be transmitted in any direction.

Referring again to Figure 1 of the drawings, the keys 16 on the front of the unit 21 are connected to a control circuit 17, which determines the code format of the signal that needs to be transmitted, in order to immobilise the identified vehicle.

The control circuit 17 may comprise a database, which provides details of the required code format, once the make or model of the vehicle has been entered. Alternatively, the control circuit 17 may be arranged to obtain the details via a radio link from police headquarters.

The selected code format to be transmitted is fed to a transmitter circuit 18, which modulates the code onto a high frequency radio carrier wave. The output power of the transmitter circuit 18 is preferably much greater than the output power of the transmitter in the conventional remote control device 11. The high power radio signal is transmitted via the directional aerial 20 to the vehicle to be immobilised.

The normal code that needs to be transmitted from the remote device 11 to immobilise and de-immobilise the vehicle is quite complex and often changes each time the vehicle is immobilised. Thus, the police unit 21 may transmit a master code, which is different from the normal code, the vehicle unit 10 being arranged to respond to either the normal code or the master code.

This master code can be unique to the vehicle, to the make of vehicle or to the model of vehicle. In the latter two cases, the directional aerial 20 on the police unit helps to ensure that adjacent vehicles of the same make or model are not also immobilised when the police unit 20 is activated.

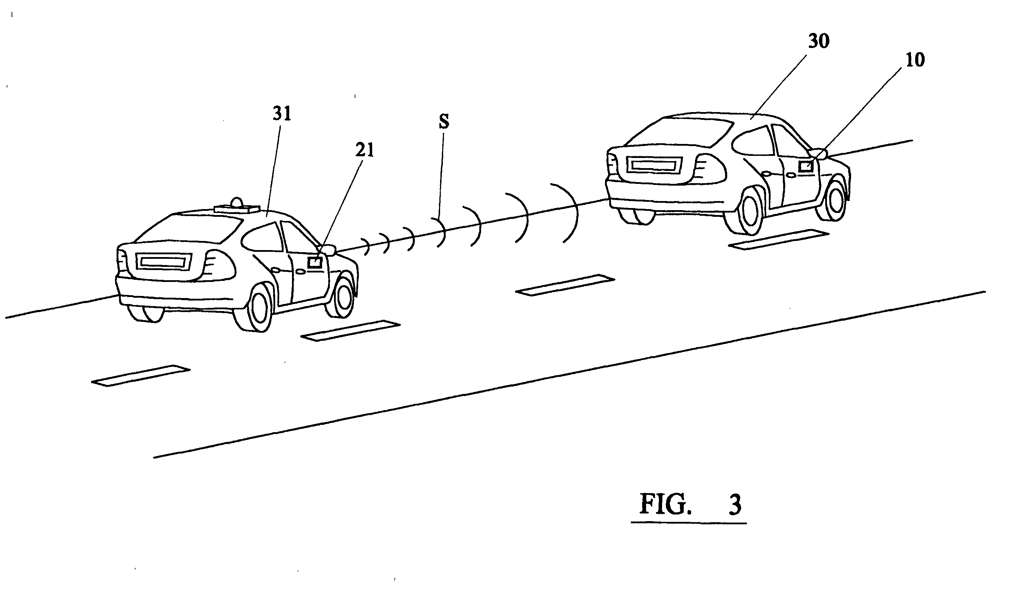

Referring to Figure 3 of the drawings, once the identity of the stolen vehicle 30 has been entered into the unit 21 in the police vehicle 31, the stolen vehicle 30 can be immobilised by pursuing it in the police vehicle 31 and actuating a switch 22 (Figure 2) on the police unit 21 to cause a directional control signal S to be transmitted to the stolen vehicle 30. The power of the transmitted control signal S is sufficient to reach the unit 10 in the stolen vehicle 30 from a distance of 50 metres or more.

When the unit 10 in the stolen vehicle receives the signal S from the unit 21 in the police vehicle 31, the stolen vehicle is partially immobilised, so that it gradually loses power, thereby enabling the driver to be apprehended safely, without any need for a prolonged high speed pursuit.

## Claims

1. An immobilisation system for a Vehicle (30), the system comprising a vehicle unit (10), a first remote control device (11) and a second remote control device (21), the vehicle unit (10) comprising a receiver (13) for receiving wireless control signals directly from said remote control devices (11, 21) and means (15) for immobilising said vehicle (30) in response to predetermined control signals from either said first or said second remote control device (11, 21), wherein said first remote control device (11) is arranged to transmit a predetermined control signal which is substantially unique to said receiver (13) and wherein said second remote control device (21) comprises externally operable selection means (16) for selecting the predetermined control signal to be transmitted and means (17) for determining the format of the predetermined control signal to be transmitted, **characterised in that** the format of the predetermined control signal is determined from the make and/or model of the Vehicle (30), which is input using said externally operable selection means (16) .

2. An immobilisation system as claimed in claim 1, **characterised in that** the vehicle unit (10) may be responsive to either a master control signal from the second remote control device (21) or a control signal transmitted by the first remote control device (11).

3. An immobilisation system as claimed in claims 1 or 2, **characterised in that** the vehicle unit (10) will not respond to control signals from the second control unit (21), once the Vehicle (30) has been immobilised using first remote control device (11).

4. An immobilisation system as claimed in any preceding claim, **characterised in that** the second remote control device (21) comprises a directional aerial (20).

5. An immobilisation system as claimed in any preceding claim, **characterised in that** the power of the signal transmitted by the second remote control device (21) is substantially greater than the power transmitted by the first remote control device (11).

6. An immobilisation system as claimed in any preceding claim, **characterised in that** the vehicle unit (10) is arranged not to respond to control signals received from the first remote control device (11), once a control signal has been received from the second remote control device (21).

7. An immobilisation system as claimed in any preceding claim, **characterised in that** the vehicle unit (10) can be arranged to only partially immobilise the vehicle (30) upon receipt of a control signal from the second remote control device (21).

8. An immobilisation system as claimed in claim 7, **characterised in that** the second remote control device (21) comprises means for selecting and/or varying the degree of immobilisation.

9. An immobilisation system as claimed in any preceding claim, **characterised in that** the second remote control device (21) comprises means for de-activating the immobiliser.

## Patentansprüche

1. Immobilisierungssystem für ein Fahrzeug (30), welches System eine Fahrzeugeinheit (10), eine erste Fernsteuerungsvorrichtung (11) und eine zweite Fernsteuerungsvorrichtung (21) aufweist, wobei die Fahrzeugeinheit (10) einen Empfänger (13) zum Empfangen von drahtlosen Steuersignalen direkt von den Fernsteuervorrichtüngen (11, 21) und Mittel (15) zum Immobilisieren des Fahrzeugs (30) als Reaktion auf vorbestimmte Steuersignale von entweder der ersten oder der zweiten Fernsteuervorrichtung (11, 21) aufweist, wobei die erste Fernsteuereinrichtung (11) dazu ausgebildet ist, ein vorbestimmtes Steuersignal zu senden, das im Wesentlichen einzigartig für den Empfänger (13) ist, und wobei die zweite Fernsteuervorrichtung (21) von außen betätigbare Auswahlmittel (16) zum Auswählen des vorbestimmten Steuersignals, das gesendet werden soll, und Mittel (17) zum Bestimmen des Formats des vorbestimmten Steuersignals, das gesendet werden soll, aufweist, **dadurch gekennzeichnet, dass** das Format des vorbestimmten Steuersignals von dem Fabrikat und/oder Modell des Fahrzeugs (30) bestimmt wird, was unter Verwendung von von außen betätigbaren Auswahlmitteln (16) eingegeben ist.

2. Immobilisierungssystem nach Anspruch 1, **dadurch gekennzeichnet, dass** die Fahrzeugeinheit (10) entweder durch ein Mastersteuersignal von der zweiten Fernsteuervorrichtung (21) oder ein Steuersignal ansprechbar ist, das durch die erste Fernsteuervorrichtung (11) gesendet wird.

3. Immobilisierungssystem nach Anspruch 1 oder 2, **dadurch gekennzeichnet, dass** die Fahrzeugeinheit (10) nicht auf Steuersignale von der zweiten Steuereinheit (21) ansprechen wird, wenn das Fahrzeug (30) erst einmal unter Verwendung der ersten Fernsteuervorrichtung (11) immobilisiert ist.

4. Immobilisierungssystem nach einem der vorangehenden Ansprüche, **dadurch gekennzeichnet, dass** die zweite Fernsteuervorrichtung (21) eine Richtungsantenne (20) aufweist.

5. Immobilisierungssystem nach einem vorangehenden Anspruch, **dadurch gekennzeichnet, dass** die Leistung des Signals, das durch die zweite Fernsteuervorrichtung (21) gesendet wird, wesentlich größer ist als die Leistung, die durch die erste Fernsteuervorrichtung (11) gesendet wird.

6. Immobilisierungssystem nach einem vorangehenden Anspruch, **dadurch gekennzeichnet, dass** die Fahrzeugeinheit (10) dazu ausgebildet ist, nicht auf Steuersignale zu reagieren, die von der ersten Fernsteuervorrichtung (11) empfangen werden, wenn ein Steuersignal erst einmal von der zweiten Fernsteuervorrichtung (21) empfangen worden ist.

7. Immobilisierungssystem nach einem vorangehenden Anspruch, **dadurch gekennzeichnet, dass** die Fahrzeugeinheit (10) dazu ausgebildet werden kann, das Fahrzeug (30) nur teilweise bei Empfang eines Steuersignals von der zweiten Fernsteuervorrichtung (21) zu immobilisieren.

8. Immobilisierungssystem nach Anspruch 7, **dadurch gekennzeichnet, dass** die zweite Fernsteuervorrichtung (21) Mittel zum Auswählen und/oder Verändern des Ausmaßes der Immobilisierung aufweist.

9. Immobilisierungssystem nach einem vorangehenden Anspruch, **dadurch gekennzeichnet, dass** die zweite Fernsteuervorrichtung (21) Mittel zum Deaktivieren des Immobilisierers aufweist.

## Revendications

1. Système d'immobilisation d'un véhicule (30), le système comprenant une unité de véhicule (10), un premier dispositif de commande à distance (11) et un second dispositif de commande à distance (21), l'unité de véhicule (10) comprenant un récepteur (13) pour recevoir les signaux de commande sans fil directement à partir desdits dispositifs de commande à distance (11, 21) et les moyens (15) pour immobiliser ledit véhicule (30) en réponse aux signaux de commande prédéterminés provenant soit du premier, soit du second dispositif de commande à distance (11, 21), dans lequel ledit premier dispositif de commande à distance est agencé pour transmettre un signal de commande prédéterminé qui est sensiblement unique vers ledit récepteur (13) et dans lequel ledit second dispositif de commande à distance (21) comprend un moyen de sélection utilisable extérieurement (16) pour sélectionner le signal de commande prédéterminé à transmettre et les moyens (17) pour déterminer le format du signal de commande prédéterminé à transmettre, **caractérisé en ce que** le format du signal de commande prédéterminé est déterminé à partir de la marque et/ou du modèle du véhicule (30), qui est foumi(e) en entrée en utilisant lesdits moyens de sélection utilisables extérieurement (16).

2. Système d'immobilisation selon la revendication 1, **caractérisé en ce que** l'unité de véhicule (10) peut être sensible à soit un signal de commande maître provenant du second dispositif de commande à distance (21), soit un signal de commande transmis par le premier dispositif de commande à distance (11).

3. Système d'immobilisation selon la revendication 1 ou 2, **caractérisé en ce que** l'unité de véhicule (11) ne va pas répondre aux signaux de commande provenant de la seconde unité de commande (21), une fois que le véhicule (30) a été immobilisé en utilisant le premier dispositif de commande à distance (11).

4. Système d'immobilisation selon l'une quelconque des revendications précédentes, **caractérisé en ce que** le second dispositif de commande à distance (21) comprend une antenne directive (20).

5. Système d'immobilisation selon l'une quelconque des reyendications précédentes, **caractérisé en ce que** la puissance du signal transmise par le second dispositif de commande à distance (21) est sensiblement supérieure à la puissance transmise par le premier dispositif de commande à distance (11).

6. Système d'immobilisation selon l'une quelconque des revendications précédentes, **caractérisé en ce que** l'unité de véhicule (10) est agencée de façon à ne pas répondre aux signaux de commande reçus à partir du premier dispositif de commande à distance (11), une fois qu'un signal de commande a été reçu à partir du second dispositif de commande à distance (21).

7. Système d'immobilisation selon l'une quelconque des revendications précédentes, **caractérisé en ce que** l'unité de véhicule (10) peut être agencée uniquement pour immobiliser partiellement le véhicule (30) lors de la réception d'un signal de commande provenant du second dispositif de commande à distance (21).

8. Système d'immobilisation selon la revendication 7, **caractérisé en ce que** le second dispositif de commande à distance (21) comprend des moyens pour sélectionner et/ou pour faire varier le degré d'immobilisation.

9. Système d'immobilisation selon l'une quelconque des revendications précédentes, **caractérisé en ce que** le second dispositif de commande à distance (21) comprend des moyens pour désactiver l'immobilisateur.
